# EUROPÄISCHE PATENTSCHRIFT

(11) **EP 2 944 002 B1**
(45) Veröffentlichungstag und Bekanntmachung des Hinweises auf die Patenterteilung: **22.09.2021**
(21) Anmeldenummer: 13747345.0
(22) Anmeldetag: 10.07.2013
(51) Int. Cl.: H01S 3/107, H01S 3/23, H01S 3/082, H01S 3/08, H01S 3/10, H01S 3/109

(54) **REGENERATIVE LASERVERSTÄRKERANWENDUNGEN**
REGENERATIVE LASER AMPLIFIER APPLICATIONS
APPLICATIONS RÉGÉNÉRATIVES D'UN AMPLIFICATEUR LASER

(30) Priorität: 09.01.2013 WO PCT/EP2013/000044
(43) Veröffentlichungstag der Anmeldung: 18.11.2015
(73) Patentinhaber: Universität Stuttgart, 70174 Stuttgart (DE)
(72) Erfinder: FRÜCHTENICHT, Johannes, 80339 München (DE); VOSS, Andreas, 45138 Essen (DE); ABDOU AHMED, Marwan, 70569 Stuttgart (DE); STOLZENBURG, Christian, 75365 Calw-Stammheim (DE)
(74) Vertreter: Müller-Boré & Partner Patentanwälte PartG mbB
(86) Internationale Anmeldenummer: PCT/EP2013/002039
(87) Internationale Veröffentlichungsnummer: WO 2014/108143

(56) Entgegenhaltungen:
- DE-A1- 10 063 976
- US-A- 4 841 528
- US-B1- 6 807 198
- None

## Beschreibung

Die Erfindung betrifft einen regenerativen Laserverstärker und ein Verfahren zum Steuern eines regenerativen Laserverstärkers.

Regenerative Laserverstärker werden dazu verwendet, einen Laserpuls von einem Seedlaser, sogenanntes Seedlicht mit kurzer Pulsdauer (typischerweise im fs-, ps-, oder ns- Bereich), zu verstärken. Dabei wird ein bereitgestellter Seedpuls verstärkt.

Die Verstärkung erfolgt im Inneren eines Resonatorraums des regenerativen Laserverstärkers. Das Seedlicht wird eingekoppelt und durchläuft als Strahlung den Resonatorraum und ein in ihm angeordnetes Verstärkungsmedium solange, bis die gewünschte Verstärkung der Strahlung erreicht ist (üblich sind hierbei einige zehn oder einige hundert Umläufe). Das Verstärkungsmedium wird durch eine externe Quelle so gepumpt, dass es seine Energie an die Strahlung im Resonatorraum abgeben kann. Erreicht die Strahlung ihre gewünschte Verstärkung, so wird sie als verstärkter Laserpuls aus dem Resonatorraum ausgekoppelt. Typische Laserpulsdauern liegen z.B. im Bereich von einigen Femtosekunden über Pikosekunden bis zu einigen Nanosekunden.

Das Auskoppeln erfolgt mittels eines optischen Schalters, üblicherweise eines elektrooptischen Modulators und eines Polarisators. Regenerative Laserverstärker können dazu eine Pockelszelle aufweisen, die so angesteuert werden kann, dass im Resonatorraum befindliche Strahlung zum Beispiel über einen Polarisationsstrahlteiler aus dem Resonatorraum ausgekoppelt werden kann.

Die wesentlichen Eigenschaften des von dem regenerativen Laserverstärker ausgekoppelten Strahlungspulses sind seine Pulsdauer, seine Pulsenergie, seine spektrale Breite und seine Wellenlänge bzw. Frequenz.

Dokument US 6,807,198 betrifft einen Laser mit einer Pumpeinheit und einem Resonator, der auf der einen Seite von einem Resonatorspiegel begrenzt ist und der sich auf der anderen Seite gabelt in einen Oszillator und in einen Verstärker. Nachdem im Oszillator eine Pulsform geformt worden ist, schaltet eine Pockelszelle die Polarisation der Strahlung um, wodurch die Strahlung in den Verstärker gekoppelt wird.

Dokument DE 100 63 976 A1 betrifft einen regenerativen Verstärker mit Resonatorraum mit dispersiven Spiegeln und mit einer Pockelszelle zum Auskoppeln der Laserstrahlung an einem Dünnschichtpolarisator.

Dokument US 4,841,528 betrifft einen cavity-dumped Laser mit einem elektrooptischen Modulator, der die Polarisation der im Resonatorraum befindlichen Strahlung steuert. Abhängig von der Polarisation läuft die Laserstrahlung im Resonator zwischen den unterschiedlichen Spiegeln, wobei Strahlung mit verdoppelter Frequenz ausgekoppelt wird.

Der vorliegenden Erfindung liegt die Aufgabe zugrunde, einen verbesserten regenerativen Laserverstärker bereitzustellen, insbesondere einen Laserverstärker, mit dem zumindest eine Eigenschaft des zu verstärkenden Laserpulses eingestellt werden kann.

Diese Aufgabe wird durch die Gegenstände der unabhängigen Ansprüche gelöst.

Ein Aspekt betrifft einen regenerativen Laserverstärker. Der regenerative Laserverstärker zur Verstärkung von Seedlicht weist einen Resonatorraum und eine polarisationsabhängige Ausgangskomponente auf, durch die Strahlung aus dem Resonatorraum auskoppelbar ist. Eine solche polarisationsabhängige Ausgangskomponente kann zum Beispiel ein Polarisationsstrahlteiler sein. In dem Resonatorraum ist ein Verstärkungsmedium zum Verstärken von im Resonatorraum befindlicher Strahlung angeordnet. Weiterhin weist der regenerative Laserverstärker mindestens eine Pockelszelle auf, insbesondere nur eine einzige Pockelszelle. Durch Ansteuerung der mindestens einen Pockelszelle kann im Resonatorraum befindliche Strahlung so polarisiert werden, dass die Strahlung durch die polarisationsabhängige Ausgangskomponente aus dem Resonatorraum auskoppelbar ist. Die Strahlung im Resonatorraum ist dabei eine Lichtstrahlung, die durch das Seedlicht bereitgestellt wird und die durch das Verstärkungsmedium im Resonatorraum verstärkt werden kann.

Eine Pockelszelle ist ein elektrooptischer Schalter, der üblicherweise auf dem Pockelseffekt beruht, einem elektrooptischen Effekt. Wird an eine solche Pockelszelle ein elektrisches Feld angelegt, weist sie für die E-Feld Komponenten der sie durchströmenden Strahlung unterschiedliche Brechzahlen auf (Doppelbrechung). Durch Ansteuerung einer Pockelszelle kann somit die Polarisation der sie durchströmenden Strahlung beeinflusst bzw. eingestellt werden, insbesondere die Polarisationsrichtung von linear polarisierter Strahlung kann so geschalten werden. Pockelszellen weisen regelmäßig einen doppelbrechenden Kristall auf. Eine Pockelszelle kann in zwei gegenläufigen Richtungen von der Strahlung durchlaufen werden. Somit stellen die beiden Seiten einer Pockelszelle zwei Seiteneingänge bzw. Seitenausgänge bereit. Eine Pockelszelle im Sinne der vorliegenden Anmeldung kann auf einem linearen oder nichtlinearen elektrooptischen Effekt beruhen. Der Laserverstärker kann insbesondere nur eine einzige Pockelszelle aufweisen, die mehrere Schaltungsfunktionen des Laserverstärkers ausführt.

Kommerziell erhältliche Pockelszellen werden mit sehr geringem Jitter immer schneller schaltbar (steilere Flanken und höhere Repetitionsraten), was neue Einsatzmöglichkeiten ermöglicht.

Der regenerative Laserverstärker weist in seinem Resonatorraum weiterhin einen zusätzlichen polarisationsabhängigen Resonatorweg mit mindestens einem optisch dispersiven Element auf. Abhängig von der Polarisation der sich im Resonatorraum befindlichen Strahlung durchläuft die Strahlung den polarisationsabhängigen Resonatorweg entweder unter einer ersten Wechselwirkung mit dem optischen Element oder ohne bzw. unter einer zweiten Wechselwirkung mit dem optischen Element. Da die Polarisation der Strahlung im Resonatorraum von der Pockelszelle steuerbar ist, ist durch die Ansteuerung der Pockelszelle festlegbar, ob die erste Wechselwirkung mit dem optischen Element auftreten soll oder nicht. Durch die erste Wechselwirkung mit dem optischen Element können wesentliche Eigenschaften des Laserpulses beeinflusst werden. Ob und wie stark die Eigenschaften verändert bzw. eingestellt werden, ist abhängig von der Steuerung der Pockelszelle. Somit kann durch korrekte Ansteuerung der Pockelszelle ein Laserpuls mit den gewünschten Eigenschaften bereitgestellt werden.

Das optisch dispersive Element verändert über seine Wechselwirkung mit der Strahlung die Pulsdauer. Dabei wird die zeitliche Dauer des zu verstärkenden Pulses bei jedem Umlauf unter der ersten Wechselwirkung mit dem dispersiven Element verlängert oder verkürzt.

Die Pockelszelle steuert dabei, ob die im Resonatorraum befindliche Strahlung den polarisationsabhängigen Resonatorweg unter der ersten Wechselwirkung durchläuft oder nicht. Steuert die Pockelszelle die im Resonatorraum befindliche Strahlung so an, dass die erste Wechselwirkung nicht auftritt, erfolgt entweder gar keine Wechselwirkung der Strahlung mit dem optischen Element oder die zweite Wechselwirkung.

Die zweite Wechselwirkung der Strahlung mit dem optischen Element kann dabei insbesondere als eine gegenüber der ersten Wechselwirkung an Stärke reduzierte Wechselwirkung der gleichen Art ausgebildet sein. Die zweite Wechselwirkung kann z.B. gegenüber der ersten Wechselwirkung um zumindest 50%, bevorzugt um zumindest 80%, bevorzugt um zumindest 95%, besonders bevorzugt um zumindest 99% reduziert ausgebildet sein. Die zweite Wechselwirkung ist ebenso wie die erste Wechselwirkung eine Wechselwirkung der Strahlung mit dem optisch dispersiven Element.

Die zweite Wechselwirkung ist dabei bevorzugt ganz abgeschalten. Unter Umständen lässt sich die Strahlung von der Pockelszelle aber nicht so ansteuern, dass die zweite Wechselwirkung restlos verschwindet. Deswegen kann es zum Auftreten der zweiten Wechselwirkung als eine reduzierte Wechselwirkung kommen.

In einem Ausführungsbeispiel ist der polarisationsabhängige Resonatorweg auf der Seite der Pockelszelle angeordnet, die im Resonatorraum einer Eingangskomponente abgewandt ist. Dabei kann die Eingangskomponente einstückig mit der Ausgangskomponente ausgebildet sein. Der Resonatorraum wird von der Pockelszelle räumlich in einen ersten und einen zweiten Resonatorarm geteilt. Damit kann im ersten Resonatorarm durch die Pockelszelle das Ein- und/oder Auskoppeln der Strahlung gesteuert werden und im zweiten Resonatorarm durch die Pockelszelle die erste (und ggf. zweite) Wechselwirkung mit dem im polarisationsabhängigen Resonatorweg angeordneten optischen Element. Dadurch können mit einer einzigen Pockelszelle mehrere optische Funktionen des regenerativen Laserverstärkers gesteuert werden, das Einkoppeln des Seedlichts, das Auskoppeln der verstärkten Strahlung und/oder die Pulseigenschaftveränderung.

In einer Ausführungsform weist der polarisationsabhängige Resonatorweg zwei räumlich getrennte Resonatorwegabschnitte und einen Polarisationsstrahlteiler auf. Mit Hilfe des Polarisationstrahlteilers wird die Strahlung im Resonatorraum in Abhängigkeit von der Polarisation, in die die Strahlung von der Pockelszelle geschalten wurde, in den Resonatorwegabschnitt mit dem optischen Element oder in den Resonatorwegabschnitt ohne bzw. mit einem anderen optischen Zweitelement eingekoppelt. Durch die räumliche Trennung der beiden Resonatorwegabschnitte wird eine besonders effektive Separation der Resonatorumläufe mit und ohne der ersten Wechselwirkung erreicht, wobei Intensitätsverluste klein gehalten werden. In dieser Ausführungsform durchläuft die Strahlung den polarisationsabhängigen Resonatorweg entweder mit oder ohne erste Wechselwirkung mit dem optischen Element. Eine zweite (z.B. reduzierte) Wechselwirkung mit dem optischen Element kann, bedingt durch die räumliche Aufteilung des polarisationsabhängigen Resonatorwegs, nicht erfolgen. Wird die Strahlung durch die Pockelszelle so angesteuert, dass sie den Resonatorwegabschnitt durchläuft, in dem das optische Element nicht angeordnet ist, so kann eine dritte Wechselwirkung mit einem optischen Zweitelement erfolgen, das in diesem räumlich getrennten Resonatorwegabschnitt angeordnet ist. Das optische Zweitelement kann z.B. als ein dispersives Element, eine resonante Gitterwellenleiterstruktur, ein nicht-lineares Element oder ein Frequenzkonversionsmedium ausgebildet sein.

In einer Ausführungsform ist das optische Element derart polarisationsabhängig ausgebildet, dass die erste Wechselwirkung mit der im Resonatorraum befindlichen Strahlung in Abhängigkeit von seiner Polarisation erfolgt. Wird der Strahlung von der Pockelszelle eine Polarisation zugewiesen, in der das optische Element die Strahlung beeinflusst, so ändert sich zum Beispiel deren Wellenlänge oder Pulsdauer. Polarisiert die Pockelszelle die Strahlung im Resonatorraum derart, dass sie das optische Element ohne oder unter der zweiten Wechselwirkung passiert, wird sie bei den Resonatorumläufen durch das optische Element nicht bzw. anders, insbesondere reduziert bzw. abgeschwächt, verändert. In einer Ausführungsform ist durch die Ansteuerung der mindestens einen Pockelszelle eine Anzahl von Resonatorumläufen von Strahlung durch den polarisationsabhängigen Resonatorweg unter der ersten Wechselwirkung mit dem optischen Element einstellbar und/oder eine Anzahl von Resonatorumläufen ohne oder unter der zweiten Wechselwirkung mit dem optischen Element einstellbar. Dadurch können für jeden neuen Puls eine individuelle Anzahl an Durchläufen unter der ersten Wechselwirkung und an Durchläufen ohne oder unter der zweiten Wechselwirkung angesteuert werden. Damit ist eine beliebige Abfolge von Pulsen individueller, quasi kontinuierlich einstellbarer Pulseigenschaften einstellbar. Die Einstellstufen richten sich dabei nach der vorgesehenen Gesamtzahl der Resonatorumläufe der Strahlung.

In einer Ausführungsform weist der regenerative Laserverstärker eine erste und eine zweite im Resonatorraum angeordnete Pockelszelle auf. Dabei ist durch Ansteuerung der ersten Pockelszelle im Resonatorraum befindliche Strahlung so polarisierbar, dass die verstärkte Strahlung durch die polarisationsabhängige Ausgangskomponente aus dem Resonatorraum ausgekoppelt wird. Die erste Pockelszelle dient also zur Steuerung des Resonatorraumausgangs. Durch Ansteuerung der zweiten Pockelszelle ist der polarisationsabhängige Resonatorweg ansteuerbar. Weiterhin kann eine der beiden Pockelszellen den Resonatoreingang steuern.

In einem Ausführungsbeispiel ist im Laserverstärker eine polarisationsabhängige Eingangskomponente räumlich getrennt von der polarisationsabhängigen Ausgangskomponente angeordnet. Die Pockelszelle ist so ansteuerbar, dass Seedlicht mit einer vorbestimmten Polarisation im Resonatorraum eingefangen wird und (z.B. verstärkte) Strahlung durch die Ausgangskomponente auskoppelbar ist. Somit kann mit einer Pockelszelle sowohl das Einkoppeln als auch das Auskoppeln von Strahlung an räumlich voneinander getrennten Bauteilen des Laserverstärkers gesteuert werden.

In einem Ausführungsbeispiel ist die Pockelszelle an Schaltzeitpunkten ansteuerbar ausgebildet, die zu Teilen von Resonatorumläufen gehören. Somit können einzelnen Teilen, Resonatorarmen oder/oder Resonatorwegabschnitten des Resonatorraums unterschiedliche Funktionen zugewiesen werden.

Ein Aspekt betrifft ein Verfahren zum Steuern eines regenerativen Laserverstärkers.

Das Verfahren weist die Schritte auf:
Ansteuern mindestens einer resonatorinternen Pockelszelle zum Einstellen der Polarisation der Strahlung im Resonatorraum derart, dass die Strahlung eine einstellbare Anzahl von Resonatordurchläufen unter einer ersten Wechselwirkung mit einem resonatorinternen optisch dispersiven Element ausführt und eine einstellbare Anzahl von Resonatorumläufen ohne oder unter einer zweiten Wechselwirkung mit dem optisch dispersiven Element ausführt und Ansteuern der mindestens einen Pockelszelle zum Auskoppeln von verstärkter Strahlung aus dem Resonatorraum heraus.

Eine einstellbare Anzahl von Resonatorumläufen unter der ersten Wechselwirkung mit dem optischen Element dient zum Einstellen der Pulsdauer. Das Verfahren kann insbesondere zum Ansteuern des oben beschriebenen regenerativen Laserverstärkers verwendet werden.

Dabei kann die Pockelszelle an Schaltzeitpunkten angesteuert werden, die zu Teilen von Resonatorumläufen (im Gegensatz zu vollen Resonatorumläufen) der resonatorinternen Strahlung gehören. So kann durch die Kombination von momentaner Pulsposition im Resonatorraum und Schaltzeitpunkt die Wirkung der einen Pockelszelle auf mehrere unterschiedliche polarisationsabhängige Vorgänge angewendet werden. Durch eine einzige Pockelszelle werden damit mehrere Vorgänge geschaltet. Dadurch erfolgt eine Mehrfachnutzung der Pockelszelle durch zeitlich serielle Schaltzeitpunkte. Die Pockelszelle wird in verschiedenen Resonatorumlaufabschnitten als unterschiedlich wirkendes Resonatorelement genutzt.

In einem Ausführungsbeispiel wird der regenerative Laserverstärker in einem alternierenden Betrieb so angesteuert, dass die Pockelszelle zum Auskoppeln zweier aufeinanderfolgender Strahlpulse zwei unterschiedliche Schaltvorgänge durchführt. In der Regel muss die Pockelszelle einmal zum "Einfangen", also zum Einkoppeln des Seedlichts umgeschaltet werden, und ein zweites Mal zum Auskoppeln der verstärkten Strahlung. Damit würden zur Verstärkung jedes Seedlichtpulses zwei Schaltvorgänge an der Pockelszelle notwendig sein. Im alternierenden Betrieb wird die Pockelszelle zum Einfangen von Seedlicht ein erstes Mal umgeschaltet, und beim Auskoppeln der verstärkten Strahlung ein zweites Mal. Gleichzeitig bei diesem zweiten Umschalten der Pockelszelle wird ein nachfolgender Seedlichtpuls eingefangen, der im Laserverstärker anschließend verstärkt wird. Zwei aufeinanderfolgende Seedlichtpulse werden also bei unterschiedlichen Schaltvorgängen der Pockelszelle (z.B. Ein- und Ausschalten; von "+λ/4-Spannung" auf "-λ/4-Spannung" und umgekehrt, etc.) eingekoppelt. Genauso werden zwei aufeinanderfolgende verstärkte Strahlpulse bei unterschiedlichen Schaltvorgängen der Pockelszelle ausgekoppelt. Damit verringert der alternierende Betrieb der beiden Betriebsreihenfolgen die Anzahl der nötigen Schaltvorgänge der Pockelszelle von 2 Schaltvorgängen auf (im Durchschnitt) 1,5 benötigte Schaltvorgänge. Durch eine so verringerte Anzahl der benötigten Schaltvorgänge erhöht sich die Lebensdauer der Pockelszelle deutlich.

Die Erfindung wird nachfolgend anhand von in den Figuren dargestellten Ausführungsbeispielen näher erläutert. Es zeigen:
- Fig. 1: einen schematisch dargestellten regenerativen Laserverstärker mit einem polarisationsabhängigen Resonatorweg,
- Fig. 2: einen schematisch dargestellten regenerativen Laserverstärker mit einem räumlich getrennten polarisationsabhängigen Resonatorweg und
- Fig. 3: einen schematisch dargestellten regenerativen Laserverstärker mit einem räumlich getrennten Ein- und Ausgang.

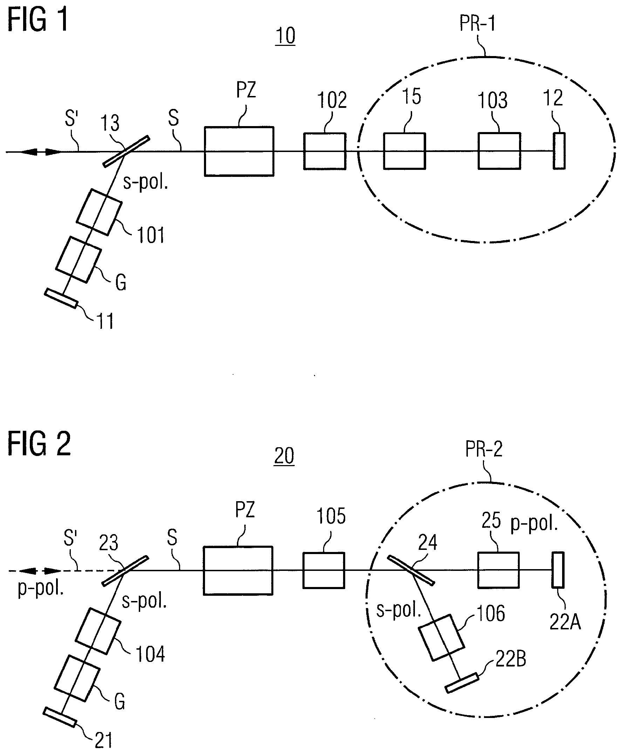

**Fig. 1** zeigt einen regenerativen Laserverstärker 10 in einer schematischen Ansicht. Der Laserverstärker 10 ist an einem Ende von einem ersten Reflektor 11 begrenzt, an einem anderen Ende von einem zweiten Reflektor 12. Zwischen dem ersten und zweiten Reflektor 11 und 12 ist ein Resonatorraum ausgebildet. Der Laserverstärker 10 weist weiterhin ein Verstärkungsmedium G, eine Pockelszelle PZ und einen polarisationsabhängigen Resonatorweg PR-1 auf. Ein optisches Element 15 ist als Bestandteil des polarisationsabhängigen Resonatorwegs PR-1 ausgebildet. Zusätzliche Resonatorkomponenten sind in der Fig. 1 mit den Bezugszeichen 101, 102 und 103 gezeigt. Ein Polarisationsstrahlteiler 13 als polarisationsabhängige Eingangs-/Ausgangskomponente dient zum Ein- und Auskoppeln von Strahlung in bzw. aus dem Resonatorraum.

Anhand des in Fig. 1 gezeigten regenerativen Laserverstärkers 10 wird im Folgenden die Funktionsweise eines solchen Laserverstärkers erläutert: Ein (in Fig. 1 nicht gezeigter) Seedlaser stellt ein externes Seedlicht S' bereit. Das externe Seedlicht S' wird auf den Polarisationsstrahlteiler 13 gelenkt. Der Polarisationsstrahlteiler 13 lässt nur Strahlung einer bestimmten Polarisation passieren, in diesem Ausführungsbeispiel Strahlung mit p-Polarisation. Der Polarisationsstrahlteiler 13 ist winklig gegenüber dem externen Seedlicht S' ausgerichtet, so dass s-polarisiertes Seedlicht seitlich abgelenkt wird und nicht in den Resonatorraum eindringt. Das externe Seedlicht S' dient als Quelle für eine resonatorinterne (Licht-)Strahlung S, die im Laserverstärker 10 verstärkt wird. Dabei kann die Strahlung S insbesondere ein Lichtstrahlpuls sein.

Solange die Pockelszelle PZ ausgeschaltet ist, wird das externe Seedlicht S' mit p-Polarisation durch den Polarisationsstrahlteiler 13 in den Resonator eintreten, die Pockelszelle PZ durchlaufen, am zweiten Reflektor 12 reflektiert, erneut durch die Pockelszelle PZ durchlaufen und den Resonatorraum des Laserverstärkers 10 wieder durch den Polarisationsstrahlteiler 13 verlassen. Ist die Pockelszelle PZ eingeschaltet, wird das externe Seedlicht S' mit p-Polarisation durch den Polarisationsstrahlteiler 13 in den Resonator eintreten und beim Durchlaufen der Pockelszelle PZ eine Polarisationsänderung von p- auf s-Polarisation erfahren. Von links auf die Pockelszelle PZ einfallende Strahlung S mit p-Polarisation ist rechts von der Pockelszelle PZ s-polarisiert, von rechts die Pockelszelle PZ durchlaufende Strahlung S mit s-Polarisation ist links von der Pockelszelle PZ wieder p-polarisiert. Somit wird die Strahlung S nicht in den Resonator eingekoppelt, wenn die Pockelszelle PZ dauerhaft ein- oder ausgeschaltet ist und nicht umgeschaltet wird.

Wird die Pockelszelle PZ so ein- und ausgeschaltet, dass die Strahlung S auf ihrem Weg vom Polarisationsstrahlteiler 13 zum zweiten Reflektor 12 und von dort reflektiert wieder zurück zum Polarisationsstrahlteiler 13 die Pockelszelle PZ nur einmal durchläuft, während die Pockelszelle PZ eingeschaltet ist, erhält die resonatorinterne Strahlung S links von der Pockelszelle PZ eine andere Polarisation als bei der Einkopplung durch den Polarisationsstrahlteiler. Dies kann z.B. dadurch realisiert werden, indem die Pockelszelle PZ eingeschaltet wird, bevor die Strahlung S die Pockelszelle PZ auf ihrem Weg vom Strahlteiler 13 zum zweiten Reflektor 12 zum ersten Mal durchläuft und die Pockelszelle PZ ausgeschaltet wird, während die resonatorinterne Strahlung S sich rechts von der Pockelszelle PZ befindet, also bevor die Strahlung S die Pockelszelle PZ zum zweiten Mal durchläuft. Dies kann z.B. auch dadurch realisiert werden, indem die Pockelszelle ausgeschaltet ist, während die Strahlung S die Pockelszelle PZ auf ihrem Weg vom Strahlteiler 13 zum zweiten Reflektor 12 zum ersten Mal durchläuft, und die Pockelszelle PZ dann eingeschaltet wird, wenn die resonatorinterne Strahlung S sich rechts von der Pockelszelle PZ befindet, also bevor die Strahlung S die Pockelszelle PZ zum zweiten Mal durchläuft. In beiden Fällen wird die Pockelszelle PZ also einmal umgeschaltet während sich die Strahlung S rechts von der Pockelszelle PZ befindet. Dadurch erhält die Strahlung S links von der Pockelszelle PZ s-Polarisation und sie passiert den Polarisationsstrahlteiler 13 nicht, sondern wird von ihm winklig reflektiert in Richtung des ersten Reflektors 11. Die Strahlung wird somit in den Resonator eingekoppelt. Der Polarisationsstrahlteiler 13 ist in diesem Ausführungsbeispiel transparent für p-polarisierte Strahlung und hochreflektiv für s-polarisierte Strahlung ausgebildet.

Solange die Pockelszelle PZ nicht umgeschaltet wird während sich der Strahlungspuls rechts der Pockelszelle PZ befindet, bewegt sich die links von der Pockelszelle PZ s-polarisierte resonatorinterne Strahlung S zwischen dem ersten Reflektor 11 und dem zweiten Reflektor 12. Dabei durchläuft sie unter anderem das im Resonatorraum angeordnete Verstärkungsmedium G, das die resonatorinterne Strahlung S verstärkt. Das Verstärkungsmedium G wird extern so gepumpt, dass es Energie an die das Verstärkungsmedium G durchströmende Strahlung abgeben kann. Das Verstärkungsmedium G kann auch an einer beliebigen anderen Position im Resonatorraum angeordnet sein.

Wird die Pockelszelle PZ umgeschaltet, während sich der Strahlungspuls S links der Pockelszelle PZ befindet, kann je nachdem ob die Pockelszelle hierbei ein- oder ausgeschaltet wird, der Polarisationszustand der Strahlung S rechts der Pockelszelle PZ als p-polarisiert oder s-polarisiert gewählt bzw. angesteuert werden. Wird die Pockelszelle nun nicht umgeschaltet, während die Strahlung S rechts der Pockelszelle PZ ist, bleibt die Strahlung S links der Pockelszelle s-polarisiert unabhängig vom Schaltungszustand der Pockelszelle PZ und die Strahlung S verbleibt somit eingekoppelt in den Resonator. Somit kann durch Schalten der Pockelsszelle PZ während sich der Strahlungspuls S links der Pockelszelle befindet gesteuert werden, mit welcher Polarisation die Strahlung den polarisationsabhängigen Resonatorweg PR-1 durchläuft, und somit kann gesteuert werden, ob die Strahlung S mit dem optischen Element 15 eine erste Wechselwirkung eingeht oder keine bzw. eine zweite Wechselwirkung.

Nach einer gewissen Anzahl von Umläufen (üblicherweise zwischen 20 und 300 Umläufen, zwischen 50 und 250 Umläufen, oder zwischen 100 und 200 Umläufen), teilweise mit der ersten Wechselwirkung und teilweise ohne bzw. mit der zweiten Wechselwirkung der Strahlung S mit dem optischen Element 15, ist eine Sättigung erreicht. Die Sättigung der resonatorinternen Strahlung S ist unter anderem abhängig von der Pumpleistung, den Transmissions- und Reflexionseigenschaften der verschiedenen Resonatorkomponenten und der verwendeten Wellenlänge.

Bis zum Erhalt der Sättigung muss die Pockelszelle PZ nicht mehr umgeschaltet werden.

Wird nun die Pockelszelle PZ so umgeschaltet, dass die verstärkte Strahlung S die Pockelszelle PZ auf ihrem Weg vom Strahlteiler 13 zum zweiten Reflektor 12 und reflektiert von dort auf ihrem Weg zurück zum Strahlteiler 13 einmal in eingeschaltetem Zustand und einmal im ausgeschalteten Zustand durchläuft, so erhält die verstärkte Strahlung S links von der Pockelszelle PZ p-Polarisation. Durch die Veränderung der Polarisation der Strahlung S links der Pockelszelle PZ wird die resonatorinterne verstärkte Strahlung S nun vom Polarisationsstrahlteiler 13 nicht mehr reflektiert, sondern aus dem regenerativen Laserverstärker 10 durch den Polarisationsstrahlteiler 13 als hochintensiver Laserpuls ausgekoppelt.

Die Pockelszelle PZ wird folglich zum Einkoppeln der Strahlung S umgeschaltet, nachdem die Strahlung S die Pockelszelle ein erstes Mal durchlaufen hat und sich rechts der Pockelszelle PZ befindet. Zum Auskoppeln der verstärkten Strahlung S wird die Pockelszelle PZ erneut umgeschaltet, nachdem die Strahlung S einen oder mehrere ganze Resonatorumläufe durchgeführt hat und sich erneut rechts der Pockelszelle PZ befindet. Indem die Pockelszelle PZ umgeschaltet wird, während sich die eingekoppelte Strahlung S links der Pockelszelle PZ befindet (als zu Teilen von Resonatorumläufen gehörig) kann die erste Wechselwirkung mit dem optischen Element 15 ein- oder ausgeschaltet werden bzw. reduziert oder auf die zweite Wechselwirkung umgeschalten werden.

Das Schaltverhalten der Pockelszelle PZ kann durch ein oder mehrere λ/2-Plättchen umgekehrt oder verändert werden.

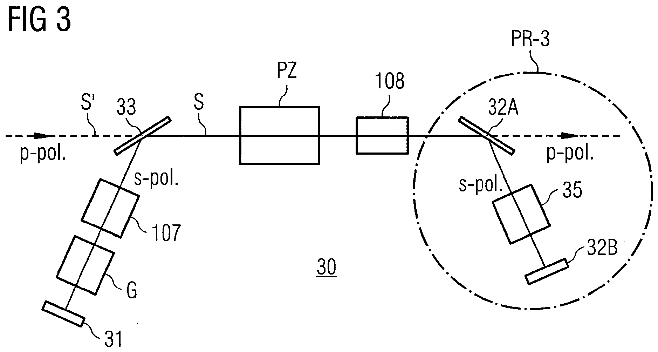

Der rechte Resonatorarm des regenerativen Laserverstärkers 10 weist den polarisationsabhängigen Resonatorweg PR-1 auf, in diesem Resonatorweg PR-1 ist das optische Element 15 angeordnet. Dieser polarisationsabhängige Resonatorweg ist in Fig. 1 nur schematisch gezeigt. Ausführungsbeispiele für einen polarisationsabhängige Resonatorweg werden anhand der Figuren 2 und 3 näher beschrieben.

Mit solchen regenerativen Laserverstärkern ist z.B. eine ca. 10⁶-fache Laserpulsverstärkung erreichbar. Der verstärkte Laserpuls verlässt den Resonator auf dem Einkoppelpfad. Um den Ein- und Ausgangsstrahl zu trennen, wird ein externer Faraday-Isolator eingesetzt (in der Fig. 1 nicht gezeigt). Der Faraday-Isolator hat wegen des nicht-linearen optischen Materials einerseits eine niedrige Zerstörschwelle und andererseits einen negativen Einfluss auf die optischen Laserstrahleigenschaften.

**Fig. 2** zeigt schematisch einen regenerativen Laserverstärker 20. Der Laserverstärker 20 weist einen Resonatorraum auf, der an einem Ende durch einen ersten Reflektor 21 begrenzt ist. Am gegenüberliegenden Ende des Laserverstärkers 20 ist ein polarisationsabhängiger Resonatorweg PR-2 angeordnet. Der Laserverstärker 20 weist einen Polarisationsstrahlteiler 23 zum Ein- und Auskoppeln von Seedlicht auf, ein Verstärkungsmedium G, eine Pockelszelle PZ, ein optisches Element 25 und weitere Resonatorkomponenten 104, 105 und 106. Der Laserverstärker 20 funktioniert ähnlich wie der in Fig. 1 gezeigte Laserverstärker 10.

Durch Ein- und Ausschalten der Pockelszelle PZ wird ein Teil der resonatorinternen Strahlung S im Resonatorraum des Laserverstärkers 20 "eingefangen". Der polarisationsabhängige Resonatorweg PR-2 weist einen Polarisationsstrahlteiler 24 auf. Auf den Polarisationsstrahlteiler 24 fallende Strahlung wird abhängig von seiner Polarisation entweder transmittiert und durch einen zweiten Reflektor 22A reflektiert, oder am Polarisationsstrahlteiler 24 reflektiert und an einen dritten Reflektor 22B zurückgelenkt. Der polarisationsabhängige Resonatorweg PR-2 weist somit zwei räumlich getrennte Resonatorwegabschnitte auf, die die resonatorinterne Strahlung S abhängig von ihrer Polarisation durchläuft. Dabei ist im ersten Resonatorwegabschnitt des polarisationsabhängigen Resonatorweges das optische Element 25 angeordnet, während im zweiten Resonatorwegabschnitt entweder kein optisches Element angeordnet sein kann oder ein optisches Zweitelement 106 zum Durchführen einer dritten Wechselwirkung mit der Strahlung S angeordnet sein kann. Es ist außerdem möglich, durch einen weiteren Spiegel und einen Strahlteiler an Stelle der Reflektoren 22A und 22B, die beiden räumlich getrennten Resonatorwegabschnitte wieder zu vereinigen und auf einen gemeinsamen Reflektor zu lenken, ohne die Funktionsweise des erfindungsgemäßen regenerativen Laserverstärkers 20 zu verändern (dies ist in Fig. 2 nicht dargestellt).

Die Funktionsweise des in Fig. 2 gezeigten Laserverstärkers 20 wird anhand eines Beispiels erläutert:
Für das Ausführungsbeispiel sind beispielsweise vierzig Resonatorumläufe für die resonatorinterne Strahlung S vorgesehen, um die gewünschte Verstärkung des Laserpulses zu erzielen.
- Seedlicht S wird beispielsweise durch ein Einschalten der Pockelszelle eingefangen. Die Pockelszelle PZ wird z.B. eingeschaltet bevor der durch den Polarisationsstrahlteiler 23 transmittierte Puls die Pockelszelle PZ erreicht. Sobald resonatorinterne Strahlung S die Pockelszelle PZ durchlaufen hat (diese ist nun s-polarisiert) und sich im rechten Resonatorarm befindet, wird die Pockelszelle PZ abgeschaltet.

Die resonatorinterne Strahlung S durchläuft nun den Resonatorraum von dem ersten Reflektor 21 bis zum dritten Reflektor 22B und somit den zweiten Resonatorwegabschnitt des polarisationsabhängigen Resonatorwegs PR-2, in dem keine Wechselwirkung mit dem optischen Element 25 auftritt. Man belässt diesen Zustand für eine bestimmte Anzahl von Durchläufen so (zum Beispiel für 26 der insgesamt vierzig Durchläufe).
- Wenn sich die resonatorinterne Strahlung S zum sechsundzwanzigsten Mal im linken Resonatorarm befindet, wird die Pockelszelle PZ umgeschalten (im Beispiel: eingeschalten) und in diesem Zustand belassen (im Beispiel: eingeschalten). Die Strahlung S gelangt in den Resonatorbereich rechts von der Pockelszelle PZ und ist dort p-polarisiert. Dies bedeutet, dass für die Strahlung S der Polarisationsstrahlteiler 24 transparent ist und die Strahlung S nun zwischen dem ersten Reflektor 21 und dem zweiten Reflektor 22A den Resonatorraum durchläuft. Beim Durchlaufen der Pockelszelle PZ von rechts nach links wird die Strahlung S wieder s-polarisiert, so dass sie am Polarisationsstrahlteiler 23 nicht aus dem Laserverstärker 20 ausgekoppelt wird, sondern weiterhin im Resonatorraum des Laserverstärkers 20 verbleibt. Die Strahlung S erfährt dabei eine erste Wechselwirkung mit dem optischen Element 25 im ersten Resonatorwegabschnitt des polarisationsabhängigen Resonatorwegs PR-2. Der Resonatorumlauf zwischen dem ersten Reflektor 21 und dem zweiten Reflektor 22A wird für vierzehn Umläufe beibehalten.

Die Auskopplung der Strahlung S erfolgt nach insgesamt vierzig Umläufen durch Ausschalten der Pockelszelle PZ, während die Strahlung S im rechten Arm ist. Bei der Rückkehr aus dem rechten Arm in den linken Arm bleibt die Strahlung S p-polarisiert und wird durch den Polarisationsstrahlteiler 23 aus dem Laserverstärker 20 ausgekoppelt.

Die Anzahl der Resonatorumläufe vom ersten Reflektor 21 zum zweiten Reflektor 22A sowie vom ersten Reflektor 21 zum dritten Reflektor 22B ist beliebig einstellbar. Ist ein konventioneller Betrieb gewünscht, so werden lediglich Resonatorumläufe der Strahlung S in dem Resonatorraum durchgeführt, der an einem Ende vom ersten Reflektor 21 und am anderen Ende vom dritten Reflektor 22B begrenzt ist. Im obigen Beispiel wurde bei vierzehn von vierzig Umläufen das optische Element 25 von der resonatorinternen Strahlung S durchlaufen. Bei dem optischen Element 25 kann es sich zum Beispiel um ein Dispersionselement, ein frequenzkonvertierendes Element (zum Beispiel SHG Kristall), einen doppelbrechendes Element oder um eine andere nicht-lineare Komponente handeln.

Zum Beispiel kann das optische Element 25 als Dispersionskontrollelement (Prisma, Gitter, nicht-lineares Element etc.) ausgebildet sein. Beim Durchlauf der resonatorinternen Strahlung S durch das optische Element 25 als dispersivem Element erfolgt die erste Wechselwirkung der Strahlung S mit dem dispersiven Element 25 dahingehend, dass unter anderem die Pulsdauer der Strahlung S verändert wird. Je nach Anzahl der Durchläufe durch das optische Element 25 (also der Resonatorumläufe zwischen dem ersten Reflektor 21 und dem zweiten Reflektor 22A) kann die Pulsdauer der resonatorinternen Strahlung S eingestellt werden. Je nach Anzahl der Pulsdurchläufe kann die Pulsdaueränderung während der Verstärkungsumläufe in so vielen Stufen geregelt werden, wie Pulsverstärkungsumläufe durch den Resonator vorgesehen sind (typischerweise einige Zehn bis einige hundert Stufen).

In einem bevorzugten Ausführungsbeispiel ist dabei die Dispersion für einen der Schaltzustände der Pockelszelle PZ gleich 0 (Resonatorumlauf zwischen dem ersten Reflektor 21 und dem dritten Reflektor 22B). Durch sinnvolle Wahl der Dispersionseigenschaften des optischen Elements 25 können so Pulsdauerverlängerungen von zum Beispiel einem Femtosekundenpuls bis hin zu einem Nanosekundenpuls erfolgen. Ein solches System kann prinzipiell auch mit noch kürzeren Pulsen als Femtosekunden geseedet werden und noch längere Pulse als Nanosekunden liefern.

Alternativ kann die Reihenfolge der Polarisationsdurchgänge auch umgekehrt werden. Dabei wird die Pockelszelle PZ eingeschaltet (und bleibt eingeschaltet), während sich der Strahlungslichtpuls zum ersten Mal im rechten Resonatorarm befindet. Der weitere Ablauf erfolgt analog. Ein alternierender Betrieb der beiden Betriebsreihenfolgen verringert die Anzahl der nötigen Schaltungen der Pockelszelle PZ von zwei auf im Durchschnitt 1,5 Schaltvorgänge und somit um 25% der in konventionellen Lasern notwendigen Schaltzyklen für nur eine einzige Anwendungsfunktion der Pockelszelle. Dies entspricht 75% der bei dem zuvor beschriebenen Verfahren benötigten Schaltvorgänge. Dadurch werden die Ansprüche an die Pockelszelle PZ, an die Kühlung und die Schaltung, reduziert.

Da man für jeden neuen Puls der Strahlung S eine individuelle Anzahl an dispersiven und gezielt nicht dispersiven Umläufen ansteuern kann, sind somit Pulsfolgen erzeugbar, die aus beliebigen Abfolgen von Pulsen individueller, quasikontinuierlich einstellbarer Pulsdauer bestehen.

Für den Einsatz in der Lasermaterialbearbeitung oder ähnlichem sind für hohe Produktivität eines gepulsten Lasersystems meistens geringe zeitliche Abstände zwischen zwei konsekutiven Laserpulsen erwünscht, also eine hohe Pulsrepetitionsrate, typischerweise ca. einige 100 kHz bis ca. 1 MHz. Für ein solches Lasersystem ist die Begrenzung der Pulsrepetitionsrate durch die Schaltgeschwindigkeit für das Adressieren der dispersiven Eigenschaften des dispersiven Elements (optisches Element 25) gegeben.

Ein solcher Laser mit gezielt einzelpulsindividuell einstellbarer Pulsdauer öffnet neuartige Möglichkeiten für Bearbeitungsstrategien (und damit neue Vorteile in Produktivität und Qualität) in der Lasermaterialbearbeitung, der Erforschung von geeigneten Parameterfeldern dafür, und allgemein in der Forschung, Messtechnik und Anwendung in den Fachgebieten Materialbearbeitung, Physik, Chemie, Biologie, Medizin, Solarzellenbearbeitung, usw.

Als Resonatorkomponenten 104, 105 und 106 können neben transmittierenden oder reflektierenden Optiken auch dispersive (GTI Spiegel) oder diffraktive Elemente, ein laseraktives Medium, nicht-lineare Komponenten, λ/2-, λ/4-Plättchen oder eine freie Propagation eingesetzt werden. Die Auswahl der Resonatorkomponenten 104, 105 und 106 hängt von dem jeweiligen Einsatzgebiet des Laserverstärkers 20 ab.

Die Pockelszelle PZ wird bei den regenerativen Laserverstärkern 10, 20 und 30 in λ/2-Spannung betrieben oder ist ausgeschalten, wirkt also wie ein schaltbares λ/2-Plättchen. Damit bewirkt sie bei eingeschalteter Spannung eine Polarisationsdrehung um 90°, also von p- auf s-Polarisation und umgekehrt. Alternativ kann durch den Einsatz von Verzögerungsplättchen ein umgekehrtes Schaltverhalten der Pockelszelle genutzt werden. Dann würde eine ausgeschaltete Spannung an der Pockelszelle eine Polarisationsdrehung bewirken, während eine eingeschaltete Spannung keine Polarisationsveränderung bewirkt. Zudem kann beim den Einsatz von λ/4-Plättchen die Pockelszelle auch mit +λ/4-Spannung und -λ/4-Spannung betrieben werden.

Bei dem regenerativen Laserverstärker 20 werden Schaltzeitpunkte für die alleinige Pockelszelle PZ gewählt, welche zu Mehrfachen von Bruchteilen von Resonatorumläufen gehören, im Gegensatz zur Nutzung von Schaltzeitpunkten nur zu vollen Resonatorumläufen.

Alternativ zu dem beschriebenen Aufbau kann der Laserverstärker 20 an Stelle des Verstärkungsmediums G z.B. ein nicht-laseraktives Medium aufweisen. Dann kann das Verstärkungsmedium anstatt der Resonatorkomponente 106 oder an der Position des optischen Elements 25 angeordnet sein. Bei dieser alternativen Ausführungsform wird die Strahlung S zunächst durch den Resonatorwegabschnitt des polarisationsabhängigen Resonatorweges mit dem Verstärkungsmedium G gesendet bis die gewünschte Verstärkung erreicht ist. Durch Umschalten der Pockelszelle kann der verstärkte Puls nun solange im anderen Resonatorwegabschnitt des polarisationsabhängigen Resonatorweges aufbewahrt werden bis er angefordert bzw. benötigt wird.

Fig. 3 zeigt ein Ausführungsbeispiel mit räumlich getrennter Ein- und Auskopplung, bei dem ein in seinen Eigenschaften direkt über den Polarisationszustand anzusprechendes Element (als optisches Element 35) nicht realisiert werden kann oder soll. Dies kann genutzt werden, um zum Beispiel einen pulsdauerflexiblen Laser zu verwirklichen, wobei jeder Laserpuls eine andere Pulsdauer aufweisen kann. Das Schaltschema ist ähnlich wie das des Ausführungsbeispiels, das in der Fig. 2 gezeigt ist.

In Fig. 3 ist ein regenerativer Laserverstärker 30 gezeigt, der eine Pockelszelle PZ, ein Verstärkungsmedium G, einen ersten Reflektor 31, einen Polarisationsstrahlteiler 33, ein optisches Element 35, einen dritten Reflektor 32B, einen zweiten Reflektor 32A (hier als Polarisationsstrahlteiler ausgebildet) sowie weitere Resonatorkomponenten 107 und 108 aufweist. Der Laserverstärker 30 erreicht eine Trennung des Ein- und Ausgangsstrahles der Strahlung S aus dem Resonatorraum des Laserverstärkers 30. Dadurch kann zum Beispiel ein Faraday-Isolator eingespart werden. Mit diesem Laserverstärker 30 lassen sich auch Leistung und Pulsenergie eines regenerativen Verstärkers ohne Limitation durch einen Faraday-Isolator skalieren. Dabei wird eine negative Beeinflussung der Strahleigenschaften durch den Faraday-Isolator vermieden, insbesondere eine Beeinflussung der Strahlqualität und der Beugungsmaßzahl. Weiterhin vertragen Faraday-Isolatoren nur eine begrenzte Durchschnittsleistung bzw. maximale Leistung (Pulsenergie/Spitzenintensität). Damit wird durch ein Einsparen von Faraday-Isolatoren eine Begrenzung der Leistungs- und Pulsenergieskalierung des Laserverstärkers vermieden.

Der Schaltablauf für den in Fig. 3 gezeigten Laserverstärker 30 erfolgt mit folgenden Schritten:
- Das Einfangen von externem Seedlicht S' erfolgt dadurch, dass die Pockelszelle PZ eingeschaltet ist, während der Puls der Strahlung S sie zum ersten Mal passiert. Während sich der Puls der Strahlung S zum ersten Mal im rechten Arm des Laserverstärkers 30 befindet, wird die Pockelszelle PZ ausgeschaltet.
- Der Puls der Strahlung S verbleibt für die gewünschte Umlaufzahl im Resonatorraum des Laserverstärkers 30 gefangen. Der Resonatorraum ist hierbei durch den ersten Reflektor 31 auf der einen Seite und den dritten Reflektor 32B auf der anderen Seite begrenzt.
- Zum Auskoppeln wird die Pockelszelle eingeschaltet, während der Puls der Strahlung S sich im linken Arm befindet. Dadurch wird der Puls p-polarisiert und durch den Polarisationsstrahlteiler 32A aus dem Resonatorraum ausgekoppelt.

Dadurch wird eine Mehrfachnutzung der Pockelszelle PZ durch zeitlich seriellen Einsatz bei geeigneter Resonatoranordnung erzielt. Die Pockelszelle ist somit in verschiedenen Resonatorumlaufabschnitten als unterschiedlich wirkendes Resonatorelement einsetzbar. Am optischen Element 35 erfolgt eine erste Wechselwirkung des Pulses der Strahlung S z.B. durch Dispersion oder Frequenzkonvertierung.

Ein polarisationsabhängiger Resonatorweg PR-3 des Laserverstärkers 30 weist in der in Fig. 3 gezeigten Ausführungsform einen Polarisationsstrahlteiler 32A als zweiten Reflektor, das optische Element 35 und einen dritten Reflektor 32B auf.

Die Eigenschaften des Polarisationsstrahlteiler 32A können dahingehend umgekehrt sein, dass er für s-polarisierte Strahlung transmittierend ist und p-polarisierte Strahlung reflektiert. Dann wird der Schaltablauf entsprechend umgekehrt.

Die in den Figuren 1 bis 3 gezeigten Resonatorkomponenten 101 bis 113 sind schaltungsunabhängig und dienen in den Figuren lediglich dazu, das Vorhandensein zusätzlicher Komponenten aufzuzeigen. Die in den Figuren gezeigten Laserverstärker 10, 20 und 30 können alternativ auch mehr oder weniger Resonatorkomponenten aufweisen. Bei den in den Figuren gezeigten Laserverstärkern 10, 20, und 30 sind die Polarisationsstrahlteiler 13, 23, und 33 als polarisationsabhängige Komponenten so im Resonatorraum angeordnet, dass sie resonatorinternes Seedlicht eines Polarisationszustandes reflektieren und dadurch den Resonatorraum abwinkeln. Resonatorinterne Strahlung eines anderen Polarisationszustandes wird durch die Polarisationsstrahlteiler 13, 23, und 33 transmittiert und ausgekoppelt.

Bei der Beschreibung der Figuren 1 bis 3 wurden die Ausdrücke linker und rechter Resonatorarm verwendet. Diese Ausdrücke sind beispielhaft zu verstehen. Alternativ kann der linke Resonatorarm auch rechts angeordnet sein und umgekehrt. Allgemein werden die Resonatorräume der Laserverstärker 10, 20, und 30 von der Pockelszelle PZ in einen ersten und einen zweiten Resonatorarm geteilt. Der erste Resonatorarm weist in einem Strahlengangwinkel den Polarisationsstrahlteiler 13, 23 bzw. 33 auf, der zweite Resonatorarm den polarisationsabhängigen Resonatorweg PR-1, PR-2 bzw. PR-3.

Der Resonatorraum des Laserverstärkers weist einen polarisationsabhängigen Resonatorweg auf, der wiederum ein, zwei oder mehr unterschiedliche Resonatorwegabschnitte aufweisen kann.

Auch die anschaulich verwendeten Begriffe s-Polarisation und p-Polarisation sind beispielhaft zu verstehen. Die Polarisationen der Strahlungen bzw. der Polarisationsstrahlteiler können auch genau andersherum bzw. dazwischen (z.B. als +λ/4 und -λ/4) ausgebildet sein.

Das in den Figuren 1 bis 3 gezeigte Verstärkungsmedium G dient zum Verstärken des resonatorinternen Seedlichts S und kann als LAM (laseraktives Medium) ausgebildet sein. Es ist in den Figuren 1 bis 3 im Resonatorraum vor dem ersten Reflektor 11, 21 bzw. 31 angeordnet, kann aber in einer anderen Ausführungsform an einer anderen Position im Resonatorraum angeordnet sein.

### Bezugszeichenliste

- 10: Laserverstärker
- 11: erster Reflektor
- 12: zweiter Reflektor
- 13: Polarisationsstrahlteiler
- 15: optisches Element
- 20: Laserverstärker
- 21: erster Reflektor
- 22A: zweiter Reflektor
- 22B: dritter Reflektor
- 23: Polarisationsstrahlteiler
- 24: Polarisationsstrahlteiler
- 25: optisches Element
- 30: Laserverstärker
- 31: erster Reflektor
- 32A: zweiter Reflektor
- 32B: dritter Reflektor
- 33: Polarisationsstrahlteiler
- 35: optisches Element
- 101-108: Resonatorkomponente
- G: Verstärkungsmedium
- PR-1: polarisationsabhängiger Resonatorweg
- PR-2: polarisationsabhängiger Resonatorweg
- PR-3: polarisationsabhängiger Resonatorweg
- PZ: Pockelszelle
- S: im Resonatorraum befindliche Strahlung
- S': Seedlicht vor Einkopplung in den Resonatorraum

## Patentansprüche

1. Regenerativer Laserverstärker zur Verstärkung von Seedlicht, welches mittels eines externen Seedlasers eingekoppelt wird, und der zum Erzeugen von Pulsen mit einzelpulsindividuell einstellbarer Pulsdauer eingerichtet ist, mit
- einem Resonatorraum,
- einer polarisationsabhängigen Ausgangskomponente (13; 23; 33; 32A) eingerichtet zum Auskoppeln von Strahlung (S) aus dem Resonatorraum,
- mindestens einer im Resonatorraum angeordneten und steuerbaren Pockelszelle (PZ), wobei durch Ansteuerung der mindestens einen Pockelszelle (PZ) im Resonatorraum befindliche Strahlung (S) so polarisierbar ist, dass die Strahlung (S) durch die polarisationsabhängige Ausgangskomponente (13; 23; 33, 32A) aus dem Resonatorraum auskoppelbar ist, und
- einem im Resonatorraum angeordneten und derart ausgebildeten polarisationsabhängigen Resonatorweg (PR-1; PR-2; PR-3) mit einem optisch dispersiven Element (15; 25; 35), dass im Resonatorraum befindliche Strahlung (S) in Abhängigkeit von ihrer durch die mindestens eine Pockelszelle (PZ) steuerbare Polarisation entweder
-- den polarisationsabhängigen Resonatorweg (PR-1; PR-2; PR-3) unter einer ersten Wechselwirkung mit dem optisch dispersiven Element (15; 25; 35) durchläuft oder
-- den polarisationsabhängigen Resonatorweg (PR-1; PR-2; PR-3) ohne oder unter einer reduzierten Wechselwirkung der gleichen Art wie die erste Wechselwirkung mit dem optisch dispersiven Element (15; 25; 35) durchläuft;
wobei das optisch dispersive Element (15, 25; 35) derart ausgebildet ist, dass die erste Wechselwirkung des optisch dispersiven Elements (15, 25; 35) mit der Strahlung (S) die Pulsdauer der Strahlung (S) verändert.

2. Laserverstärker nach Anspruch 1, wobei der polarisationsabhängige Resonatorweg (PR-1; PR-2; PR-3) auf der im Resonatorraum der Ausgangskomponente (13; 23; 33) gegenüberliegenden Seite der mindestens einen Pockelszelle (PZ) angeordnet ist.

3. Laserverstärker nach einem der vorangegangenen Ansprüche, wobei der polarisationsabhängige Resonatorweg (PR-1; PR-2; PR-3) zwei räumlich getrennte Resonatorwegabschnitte und einen Polarisationsstrahlteiler (24; 32A) zum Einlenken von Strahlung (S) in einen der beiden Resonatorwegabschnitte in Abhängigkeit von der Polarisation der Strahlung (S) aufweist, und wobei das optisch dispersive Element (25; 35) in einem der beiden Resonatorwegabschnitte angeordnet ist.

4. Laserverstärker nach einem der vorangegangenen Ansprüche, wobei das optisch dispersive Element (15; 25; 35) derart polarisationsabhängig ausgebildet ist, dass die erste Wechselwirkung mit Strahlung (S) in Abhängigkeit von der durch die mindestens eine Pockelszelle (PZ) steuerbaren Polarisation der Strahlung (S) erfolgt.

5. Laserverstärker nach einem der vorangegangenen Ansprüche, wobei durch die Ansteuerung der mindestens einen Pockelszelle (PZ) eine Anzahl von Durchläufen von Strahlung (S) durch den polarisationsabhängigen Resonatorweg (PR-1; PR-2; PR-3) unter der ersten Wechselwirkung mit dem optischen Element (15; 25; 35) einstellbar ist und/oder eine Anzahl von Durchläufen von Strahlung (S) durch den polarisationsabhängigen Resonatorweg (PR-1; PR-2; PR-3) ohne oder unter der reduzierten Wechselwirkung mit dem optisch dispersiven Element (15; 25; 35) einstellbar ist.

6. Laserverstärker nach einem der vorangegangenen Ansprüche, wobei das optisch dispersive Element (15; 25; 35) als ein Prisma, Gitter oder eine resonante Gitterwellenleiterstruktur ausgebildet ist.

7. Laserverstärker nach einem der vorangegangenen Ansprüche, wobei der Laserverstärker (10; 20; 30) eine erste und eine zweite im Resonatorraum angeordnete Pockelszelle (PZ) aufweist, und wobei durch Ansteuerung der ersten Pockelszelle (PZ) im Resonatorraum befindliche verstärkte Strahlung (S) so polarisierbar ist, dass die verstärkte Strahlung (S) durch die polarisationsabhängige Ausgangskomponente (13; 23; 33;) aus dem Resonatorraum ausgekoppelt wird, und durch Ansteuerung der zweiten Pockelszelle (PZ) im Resonatorraum befindliche Strahlung (S) den polarisationsabhängigen Resonatorweg (PR-1; PR-2; PR-3) in Abhängigkeit von der Ansteuerung der zweiten Pockelszelle (PZ) durchläuft.

8. Laserverstärker nach einem der vorangegangenen Ansprüche, wobei eine polarisationsabhängige Eingangskomponente (33) räumlich getrennt von der polarisationsabhängigen Ausgangskomponente (32A) angeordnet ist.

9. Laserverstärker nach einem der vorangegangenen Ansprüche, wobei die Pockelszelle (PZ) an Schaltzeitpunkten ansteuerbar ausgebildet ist, die zu Teilen von Resonatorumläufen gehören.

10. Verfahren zum Steuern eines regenerativen Laserverstärkers (10; 20; 30) mit einem Resonatorraum zum Verstärken von Seedlicht (S'), welches mittels eines externen Seedlasers eingekoppelt wird, und zum Erzeugen von Pulsen mit einzelpulsindividuell einstellbarer Pulsdauer mit den Schritten
- Ansteuern mindestens einer resonatorinternen Pockelszelle (PZ) zum Einstellen der Polarisation einer Strahlung (S) im Resonatorraum derart, dass die Strahlung (S) eine einstellbare Anzahl von Resonatordurchläufen unter einer ersten Wechselwirkung mit einem resonatorinternen optisch dispersiven Element (15; 25; 35) ausführt und eine einstellbare Anzahl von Resonatordurchläufen ohne oder unter einer reduzierten Wechselwirkung der gleichen Art wie die erste Wechselwirkung mit dem optisch dispersiven Element (15; 25; 35) ausführt und
- Ansteuern der mindestens einen Pockelszelle (PZ) zum Auskoppeln von Strahlung (S) aus dem Resonatorraum heraus;
wobei durch die einstellbare Anzahl von Resonatordurchläufen unter der ersten Wechselwirkung mit dem optisch dispersiven Element (15; 25; 35) die Pulsdauer der Strahlung (S) eingestellt wird.

11. Verfahren nach Anspruch 10 zum Steuern eines Laserverstärkers nach mindestens einem der Ansprüche 1 bis 9.

12. Verfahren nach einem der Ansprüche 10 oder 11, wobei die Pockelszelle (PZ) an Schaltzeitpunkten angesteuert wird, die zu Teilen von Resonatorumläufen der resonatorinternen Strahlung (S) gehören.

13. Verfahren nach Anspruch 10, wobei der regenerative Laserverstärker (10; 20; 30) in einem alternierenden Betrieb so angesteuert wird, dass die Pockelszelle (PZ) zum Auskoppeln zweier aufeinanderfolgender Strahlpulse zwei unterschiedliche Schaltvorgänge durchführt.

## Claims

1. A regenerative laser amplifier for amplifying seed light coupled in by means of an external seed laser, and which is designed to produce pulses having a single-pulse individually adjustable pulse duration, having
- a resonator chamber,
- a polarization-dependent outlet component (13; 23; 33; 32A) designed to decouple radiation (S) from the resonator chamber,
- at least one Pockel cell (PZ) which can be controlled and is arranged in the resonator chamber, wherein by activating the at least one Pockel cell (PZ), radiation (S) in the resonator chamber can be polarized such that the radiation (S) can be decoupled from the resonator chamber by the polarization-dependent outlet component (13; 23; 33, 32A), and
- a polarization-dependent resonator path (PR-1; PR-2; PR-3) having an optically dispersive element (15; 25; 35) arranged in the resonator chamber and configured such that radiation (S) in the resonator chamber, as a function of its polarization which can be controlled by the at least one Pockel cell (PZ), either
- passes through the polarization-dependent resonator path (PR-1; PR-2; PR-3) under the effect of a first interaction with the optically dispersive element (15; 25; 35), or
- passes through the polarization-dependent resonator path (PR-1; PR-2; PR-3) without interaction or under the effect of a reduced interaction of the same type as the first interaction with the optically dispersive element (15; 25; 35);
wherein the optically dispersive element (15, 25; 35) is configured such that the first interaction of the optically dispersive element (15, 25; 35) with the radiation (S) modifies the pulse duration of the radiation (S).

2. The laser amplifier according to Claim 1, wherein the polarization-dependent resonator path (PR-1; PR-2; PR-3) is arranged on the opposite side of the at least one Pockel cell (PZ) in the resonator chamber of the outlet component (13; 23; 33).

3. The laser amplifier according to any one of the preceding claims, wherein the polarization-dependent resonator path (PR-1; PR-2; PR-3) has two spatially separated resonator path sections and a polarization beam splitter (24; 32A) for conducting radiation (S) into one of the two resonator path sections as a function of the polarization of the radiation (S), and wherein the optically dispersive element (25; 35) is arranged in one of the two resonator path sections.

4. The laser amplifier according to any one of the preceding claims, wherein the optically dispersive element (15; 25; 35) is configured to be polarization-dependent such that the first interaction with radiation (S) is effected as a function of the polarization of the radiation (S) which can be controlled by the at least one Pockel cell (PZ).

5. The laser amplifier according to any one of the preceding claims, wherein by activating the at least one Pockel cell (PZ), a number of passages of radiation (S) through the polarization-dependent resonator path (PR-1; PR-2; PR-3) can be adjusted under the effect of the first interaction with the optical element (15; 25; 35) and/or a number of passages of radiation (S) through the polarization-dependent resonator path (PR-1; PR-2; PR-3) can be adjusted without interaction or under the effect of the reduced interaction with the optically dispersive element (15; 25; 35).

6. The laser amplifier according to any one of the preceding claims, wherein the optically dispersive element (15; 25; 35) is configured as a prism, grating or a resonant grating waveguide structure.

7. The laser amplifier according to any one of the preceding claims, wherein the laser amplifier (10; 20; 30) has a first and a second Pockel cell (PZ) arranged in the resonator chamber, and wherein by activating the first Pockel cell (PZ), amplified radiation (S) in the resonator chamber can be polarized such that the amplified radiation (S) is decoupled from the resonator chamber by the polarization-dependent outlet component (13; 23; 33), and by activating the second Pockel cell (PZ), radiation (S) in the resonator chamber, passes through the polarization-dependent resonator path (PR-1; PR-2; PR-3) as a function of the activation of the second Pockel cell (PZ).

8. The laser amplifier according to any one of the preceding claims, wherein a polarization-dependent inlet component (33) is arranged spatially separated from the polarization-dependent outlet component (32A).

9. The laser amplifier according to any one of the preceding claims, wherein the Pockel cell (PZ) is configured to be activated at switching times which belong to parts of resonator circulations.

10. A method for controlling a regenerative laser amplifier (10; 20; 30) having a resonator chamber for amplifying seed light (S') coupled in by means of an external seed laser, and for producing pulses having a single-pulse individually adjustable pulse duration having the steps of:
- activating at least one Pockel cell (PZ) inside the resonator in order to adjust the polarization of a radiation (S) in the resonator chamber such that the radiation (S) executes an adjustable number of resonator passages under the effect of a first interaction with an optically dispersive element (15; 25; 35) inside the resonator and an adjustable number of resonator passages without interaction or under the effect of a reduced interaction of the same type as the first interaction, with the optically dispersive element (15; 25; 35), and
- activating the at least one Pockel cell (PZ) in order to decouple radiation (S) from the resonator chamber;
wherein the pulse duration of the radiation (S) is adjusted by the adjustable number of resonator passages under the effect of the first interaction with the optically dispersive element (15; 25; 35).

11. The method according to Claim 10 for controlling a laser amplifier according to at least one of Claims 1 to 9.

12. The method according to any one of Claims 10 or 11, wherein the Pockel cell (PZ) is actuated at switching times which belong to parts of resonator circulations of the radiation (S) inside the resonator.

13. The method according to Claim 10, wherein the regenerative laser amplifier (10; 20; 30) is actuated in alternating operation such that the Pockel cell (PZ) performs two different switching processes in order to decouple successive radiation pulses.

## Revendications

1. Amplificateur laser régénératif destiné à l'amplification d'une lumière d'injection couplée à l'aide d'un laser d'injection externe, et configuré pour produire des impulsions avec une durée d'impulsion susceptible d'être réglée individuellement pour chaque impulsion, comprenant :
- une chambre de résonateur,
- un composant de sortie dépendant de la polarisation (13 ; 23 ; 33 ; 32A), configuré pour désaccoupler un rayonnement (S) d'avec la chambre de résonateur,
- au moins une cellule de Pockels (PZ) disposée dans la chambre de résonateur et apte à être commandée, un actionnement de l'au moins une cellule de Pockels (PZ) permettant de polariser un rayonnement (S) présent dans la chambre de résonateur de telle façon que le rayonnement (S) peut être désaccouplé de la chambre de résonateur par le composant de sortie dépendant de la polarisation (13 ; 23 ; 33 ; 32A), et
- un trajet de résonateur dépendant de la polarisation (PR-1 ; PR-2 ; PR-3), disposé dans la chambre de résonateur et conçu de telle façon avec un élément dispersif optique (15 ; 25 ; 35) que le rayonnement (S) présent dans la chambre de résonateur
- parcourt le trajet de résonateur dépendant de la polarisation (PR-1 ; PR-2 ; PR-3) du fait d'une première interaction avec l'élément dispersif optique (15 ; 25 ; 35) ou
- parcourt le trajet de résonateur dépendant de la polarisation (PR-1 ; PR-2 ; PR-3) sans interaction ou du fait d'une interaction réduite du même type que la première interaction avec l'élément dispersif optique (15 ; 25 ; 35),
en fonction de sa polarisation commandable par l'au moins une cellule de Pockels (PZ) ;
dans lequel l'élément dispersif optique (15 ; 25 ; 35) est conçu de telle façon que la première interaction de l'élément dispersif optique (15 ; 25 ; 35) avec le rayonnement (S) modifie la durée d'impulsion du rayonnement (S) .

2. Amplificateur laser selon la revendication 1, dans lequel le trajet de résonateur dépendant de la polarisation (PR-1 ; PR-2 ; PR-3) est disposé sur le côté de l'au moins une cellule de Pockels (PZ) opposé au composant de sortie (13 ; 23 ; 33 ; 32A) dans la chambre de résonateur.

3. Amplificateur laser selon l'une des revendications précédentes, dans lequel le trajet de résonateur dépendant de la polarisation (PR-1 ; PR-2 ; PR-3) présente deux sections de trajet de résonateur spatialement séparées et un diviseur de faisceau (24 ; 32A) pour l'introduction d'un rayonnement (S) dans l'une des deux sections de trajet de résonateur en fonction de la polarisation du rayonnement (S), et dans lequel l'élément dispersif optique (25 ; 35) est disposé dans l'une des deux sections de trajet de résonateur.

4. Amplificateur laser selon l'une des revendications précédentes, dans lequel l'élément dispersif optique (15 ; 25 ; 35) est conçu de telle façon en fonction de la polarisation, que la première interaction avec le rayonnement (S) a lieu en fonction de la polarisation du rayonnement (S) commandable par l'au moins une cellule de Pockels (PZ).

5. Amplificateur laser selon l'une des revendications précédentes, dans lequel l'actionnement de l'au moins une cellule de Pockels (PZ) permet de régler un certain nombre de passages du rayonnement (S) à travers le trajet de résonateur dépendant de la polarisation (PR-1 ; PR-2 ; PR-3) du fait de la première interaction avec l'élément dispersif optique (15 ; 25 ; 35) et/ou de régler un certain nombre de passages du rayonnement (S) à travers le trajet de résonateur dépendant de la polarisation (PR-1 ; PR-2 ; PR-3) sans interaction ou du fait d'une interaction réduite avec l'élément dispersif optique (15 ; 25 ; 35).

6. Amplificateur laser selon l'une des revendications précédentes, dans lequel l'élément dispersif optique (15 ; 25 ; 35) est conçu comme un prisme, une grille ou une structure de grille guide d'onde résonante.

7. Amplificateur laser selon l'une des revendications précédentes, dans lequel l'amplificateur laser (10 ; 20 ; 30) présente une première et une deuxième cellule de Pockels (PZ) disposées dans la chambre de résonateur, et dans lequel un actionnement de la première cellule de Pockels (PZ) permet de polariser un rayonnement (S) amplifié présent dans la chambre de résonateur de telle façon que le rayonnement (S) amplifié est désaccouplé d'avec la chambre de résonateur par le composant de sortie dépendant de la polarisation (13 ; 23 ; 33), et un actionnement de la deuxième cellule de Pockels (PZ) permet au rayonnement (S) présent dans la chambre de résonateur de parcourir le trajet de résonateur dépendant de la polarisation (PR-1 ; PR-2 ; PR-3) en fonction de l'actionnement de la deuxième cellule de Pockels (PZ).

8. Amplificateur laser selon l'une des revendications précédentes, dans lequel un composant d'entrée dépendant de la polarisation (33) est disposé de manière à être spatialement séparé du composant de sortie dépendant de la polarisation (32A).

9. Amplificateur laser selon l'une des revendications précédentes, dans lequel la cellule de Pockels (PZ) est conçue de manière à pouvoir être actionnée à des instants de commutation correspondant à des parties de cycles de résonateur.

10. Procédé de commande d'un amplificateur laser régénératif (10 ; 20 ; 30) avec une chambre de résonateur permettant d'amplifier une lumière d'injection (S') couplée à l'aide d'un laser d'injection externe, et de produire des impulsions avec une durée d'impulsion susceptible d'être réglée individuellement pour chaque impulsion, comprenant les étapes suivantes :
- actionnement d'au moins une cellule de Pockels (PZ) interne au résonateur, pour le réglage de la polarisation d'un rayonnement (S) dans la chambre de résonateur, de telle façon que le rayonnement (S) effectue un nombre réglable de passages à travers le résonateur du fait d'une première interaction avec un élément dispersif optique (15 ; 25 ; 35) interne au résonateur et effectue un nombre réglable de passages à travers le résonateur sans interaction ou du fait d'une interaction réduite du même type que la première interaction avec l'élément dispersif optique (15 ; 25 ; 35), et
- actionnement de l'au moins une cellule de Pockels (PZ) pour le désaccouplement du rayonnement (S) d'avec la chambre de résonateur ;
dans lequel le nombre réglable de passages à travers le résonateur du fait de la première interaction avec l'élément dispersif optique (15 ; 25 ; 35) permet de régler la durée d'impulsion du rayonnement (S).

11. Procédé selon la revendication 10 pour la commande d'un amplificateur laser selon l'une au moins des revendications 1 à 9.

12. Procédé selon l'une des revendications 10 ou 11, dans lequel la cellule de Pockels (PZ) est actionnée à des instants de commutation correspondant à des parties de cycles de résonateur du rayonnement (S) interne au résonateur.

13. Procédé selon la revendication 10, dans lequel l'amplificateur laser régénératif (10 ; 20 ; 30) est actionné de telle façon dans un mode de fonctionnement alterné, que la cellule de Pockels (PZ) exécute deux opérations de commutation distinctes pour le désaccouplement de deux impulsions de faisceau consécutives.
